# EUROPEAN PATENT APPLICATION

(11) **EP 1 950 275 A2**
(43) Date of publication of application: **30.07.2008**
(21) Application number: 07253758.2
(22) Date of filing: 21.09.2007
(51) Int. Cl.: C10L 9/06

(54) **Coal desulphurization process**

(30) Priority: 18.01.2007 ZA 200700528
(71) Applicant: Exxaro Coal (Proprietary) Limited, Gauteng Province (ZA)
(72) Inventor: Kwela, Zola Nigel, Gauteng Province (ZA)
(74) Representative: Miller, James Lionel Woolverton

(57) **Abstract**

A process for reducing the pyritic sulphur content of coal includes reacting the coal with a ferric ion solution to oxidise the pyritic sulphur to elemental sulphur, and separating the coal, which includes elemental sulphur from the ferric ion solution. The coal and the elemental sulphur are then reacted in an acidic solution with nitric acid to oxidize the elemental sulphur, forming sulphuric acid. The coal is separated from the acidic sulphuric acid containing solution to provide coal with a reduced pyritic sulphur content.

## Description

THIS INVENTION relates to desulphurization of coal. In particular, the invention relates to a process for reducing the pyritic sulphur content of coal.

Many coal sources provide coal with a high sulphur content. For environmental reasons, it is undesirable to burn the coal and thereby to release SO₂ into the atmosphere.

It would be advantageous to provide an improved process to desulphurize coal particularly if such a process does not negatively affect the coking properties of the coal.

According to a first aspect of the invention, there is provided a process for reducing the pyritic sulphur content of coal, the process including
reacting the coal with a ferric ion solution to oxidise the pyritic sulphur to elemental sulphur;
separating the coal, which includes elemental sulphur from the ferric ion solution;
reacting the coal and the elemental sulphur in an acidic solution with nitric acid to oxidize the elemental sulphur, forming sulphuric acid; and
separating the coal from the acidic sulphuric acid containing solution to provide coal with a reduced pyritic sulphur content.

The coal may be reacted with the ferric ion solution at a temperature of less than 100°C. The nitric acid used to oxidise the elemental sulphur may be at a concentration of less than 10% by mass.

According to a second aspect of the invention, there is provided a process for reducing the pyritic sulphur content of coal, the process including
reacting the coal with a ferric ion solution at a temperature of less than 100°C to oxidise the pyritic sulphur to elemental sulphur;
reacting the coal and the elemental sulphur in an acidic solution with nitric acid at a concentration of less than 10% by mass to oxidise the elemental sulphur, forming sulphuric acid; and
separating the coal from the acidic sulphuric acid containing solution to provide coal with a reduced pyritic sulphur content.

Preferably, the coal is reacted with the ferric ion solution at a temperature of less than 90°C, more preferably less than 85°C, e.g. between 60°C and 80°C.

The ferric ion solution may be a ferric sulphate solution, although ferric chloride and ferric nitrate may also be used. Thus, the ferric ion solution may be selected from the group consisting of a ferric sulphate solution, a ferric chloride solution, a ferric nitrate solution and mixtures thereof.

Typically, reacting the coal with a ferric ion solution thus includes contacting the coal with the ferric ion solution by mixing the coal and the ferric ion solution. As will be appreciated, an effective amount of the ferric ion solution must be used. The effective amount will depend, amongst other factors, on the amount of coal treated, the pyritic sulphur content of the coal being treated, and the ferric ion concentration of the ferric ion solution.

The process may include adjusting the pH of the ferric ion solution to be acidic. Preferably, the pH of the ferric ion solution is maintained at less than 1. The pH of the ferric ion solution may be adjusted with sulphuric acid.

The nitric acid used to oxidise the elemental sulphur may be at a concentration of less than 2.75% by mass, e.g. about 2.2% by mass. Typically, the nitric acid is at a concentration of at least 0.5% by mass.

The elemental sulphur may be reacted with nitric acid at a temperature of less than 71 °C, e.g. about 70°C. Preferably however, the temperature is at least 40°C, more preferably at least 50°C.

The process in accordance with the second aspect of the invention may include, after reacting the coal with a ferric ion solution, separating the coal, which includes elemental sulphur from the ferric ion solution before reacting the coal and the elemental sulphur with nitric acid. Typically, the coal, which includes elemental sulphur, is filtered from the ferric ion solution and washed, e.g. with water, before reacting the coal and the elemental sulphur with nitric acid. The process may thus be a two-stage process. In the first stage, pyritic sulphur is oxidized to elemental sulphur using a ferric ion solution and, in the second stage, the elemental sulphur is oxidized to sulphate sulphur, forming sulphuric acid, by reaction with nitric acid. Indications are that the two-stage process is more advantageous than a single-stage process.

Separating the coal from the acidic sulphuric acid containing solution typically includes filtering the coal from the acidic solution. Preferably, separating the coal from the acidic sulphuric acid containing solution includes washing the separated coal, e.g. with water.

The invention will now be more fully described with reference to the following examples and the accompanying diagrammatic drawings, in which
Figure 1 shows a graph of percentage sulphur removed as a function of nitric acid concentration for a single stage process and a double stage process in accordance with the invention; and
Figure 2 shows a graph of percentage sulphur removed as a function of temperature, for different nitric acid concentrations, for a single stage process and a double stage process in accordance with the invention.

### Example 1

This Example illustrates a single stage process in accordance with the invention. A predetermined amount of ferric sulphate, typically between 20 g/L and 300 g/L, was dissolved in about 1.8 liters of water and the solution was heated to a predetermined temperature, e.g. 40°C. The solution was acidified with sulphuric acid to obtain a pH<1. 200 g of sub-bituminous coal obtained from the secondary spiral product of the beneficiation plant of Exxaro Resources, Grootegeluk, South Africa was rapidly fed through a screw feeder, and sulphuric acid was again used to maintain the pH below 1. The solution volume was raised with hot water to reach the required temperature. The stating temperature of the solution was selected such that the added sulphuric acid raised the temperature to a desired temperature, e.g. about 70°C. Slurry samples were taken at predetermined time intervals using a glass pipette. After a predetermined reaction time, e.g. 30 minutes, nitric acid was added to the solution to reach a required concentration, e.g. 2.2% nitric acid by mass. The acidic solution was kept at a desired temperature, e.g. 70°C. After the required reaction time, e.g. 15 minutes, the coal was filtered from the acidic solution and washed free of sulphur with water.

The reaction temperatures were controlled by conducting the reactions in a double walled leach reactor and controlling the temperature of water flowing through a jacket of the double walled leach reactor. A peristaltic pump was used to transfer the coal slurry from the double walled leach reactor to a filtration assembly. Probes were used to measure pH and reaction temperature. A vibrating feeder was used to feed the coal into the double walled leach reactor.

### Example 2

This Example illustrates a two stage process in accordance with the invention. A predetermined amount of ferric sulphate, e.g. between 20 g/L and 300 g/L, was dissolved in about 1.8 liters of water and the solution was heated, if necessary, to a temperature of about 30°C. The solution was acidified with sulphuric acid to obtain a pH < 1. About 200g of coal was rapidly fed through a screw feeder into a double walled leach reactor, and sulphuric acid was again used to maintain the pH < 1. The solution volume was raised with hot water to reach the required temperature. The starting temperature of the solution was selected so that a desired final temperature is reached as a result of the addition of the sulphuric acid, e.g. 60°C.

After a predetermined reaction time, e.g. 30 minutes, the coal slurry was removed from the leach reactor and filtered. The coal solids were washed with water and then recycled to the double walled leach reactor. Nitric acid was injected into the double walled leach reactor to obtain a desired concentration, e.g. about 2.2 % nitric acid by mass. The temperature was kept at a desired level, e.g. about 70°C. After the required reaction time, e.g. about 15 minutes, the contents of the double walled leach reactor were again filtered, and the coal solids washed free of sulphur with water.

In both Example 1 and Example 2, the desulphurized coal was dried and studied with a scanning electron microscope. Samples of the acid solutions from the double walled leach reactor were titrated with barium chloride to determine sulphate sulphur content, using sulfonanzo III as indicator. Iron content of the solution samples was determined by complexometry with EDTA using 5-sulfosalicyclic acid as indicator. Total sulphur was determined using Leco apparatus.

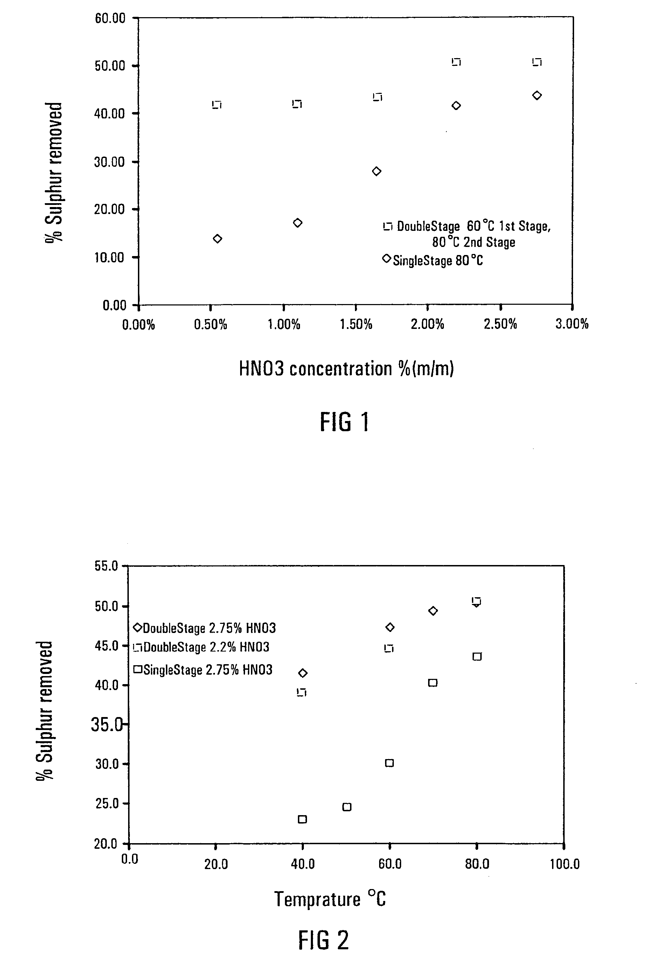

The effectiveness of the process in accordance with the invention for reducing the pyritic sulphur content of coal, using different concentrations of nitric acid and a single stage process or a double stage process along the lines of Example 1 or Example 2, is illustrated in Figure 1 of the drawings. As can be noted, the double stage process, with the ferric ion solution at 60°C and the nitric acid solution at 80°C, is considerably more effective at removing sulphur than a single stage process operating at 80°C. The advantage of using a double stage process is marked at low concentrations of less than about 2.2% nitric acid and greater than 0.5% nitric acid. It is believed that the adhesion of ferric sulphate to the coal and the loss of nitric acid as ferrous sulphate are minimized at high acid concentrations and high temperatures.

Figure 2 illustrates the effectiveness of the process of the invention in reducing the pyritic sulphur content of coal, using a double stage process at two different nitric acid concentrations, and a single stage process, for different temperatures for both the double stage process and the single stage process. As will be noted, the single stage process is sensitive to temperature and is only significantly reactive at temperatures above 60°C. The double stage process, even at lower nitric acid concentrations, is much less sensitive to temperature.

The process of the invention, as illustrated, can effectively remove a substantial portion of the pyritic sulphur content of coal, without affecting the integrity of the coal.

## Claims

1. A process for reducing the pyritic sulphur content of coal, the process including
reacting the coal with a ferric ion solution to oxidise the pyritic sulphur to elemental sulphur;
separating the coal, which includes elemental sulphur from the ferric ion solution;
reacting the coal and the elemental sulphur in an acidic solution with nitric acid to oxidize the elemental sulphur, forming sulphuric acid; and
separating the coal from the acidic sulphuric acid containing solution to provide coal with a reduced pyritic sulphur content.

2. The process as claimed in claim 1, in which the coal is reacted with the ferric ion solution at a temperature of less than 100°C.

3. The process as claimed in claim 1 or claim 2, in which the ferric ion solution is selected from the group consisting of a ferric sulphate solution, a ferric chloride solution, a ferric nitrate solution and mixtures thereof.

4. The process as claimed in any of the preceding claims, which includes adjusting the pH of the ferric ion solution to be acidic.

5. The process as claimed in claim 4, in which the pH of the ferric ion solution is maintained at less than 1.

6. The process as claimed in any of the preceding claims, in which the nitric acid used to oxidise the elemental sulphur is at a concentration of less than 10% by mass.

7. The process as claimed in any of the preceding claims, in which the elemental sulphur is reacted with nitric acid at a temperature of less than 71°C, but at least 40°C.

8. A process for reducing the pyritic sulphur content of coal, the process including
reacting the coal with a ferric ion solution at a temperature of less than 100°C to oxidise the pyritic sulphur to elemental sulphur;
reacting the coal and the elemental sulphur in an acidic solution with nitric acid at a concentration of less than 10% by mass to oxidise the elemental sulphur, forming sulphuric acid; and
separating the coal from the acidic sulphuric acid containing solution to provide coal with a reduced pyritic sulphur content.

9. The process as claimed in claim 2 or claim 8, in which the coal is reacted with the ferric ion solution at a temperature of less than 90°C.

10. The process as claimed in claim 9, in which said temperature is between 60°C and 80°C.

11. The process as claimed in any of claims 8 to 10 inclusive, in which the ferric ion solution is selected from the group consisting of a ferric sulphate solution, a ferric chloride solution, a ferric nitrate solution and mixtures thereof.

12. The process as claimed in any of claims 8 to 11 inclusive, which includes adjusting the pH of the ferric ion solution to be acidic.

13. The process as claimed in claim 12, in which the pH of the ferric ion solution is maintained at less than 1.

14. The process as claimed in any of claims 8 to 13 inclusive, in which the elemental sulphur is reacted with nitric acid at a temperature of less than 71°C, but at least 40°C.

15. The process as claimed in any of claims 8 to 14 inclusive, which includes, after reacting the coal with a ferric ion solution, separating the coal, which includes elemental sulphur from the ferric ion solution before reacting the coal and the elemental sulphur with nitric acid.

16. The process as claimed in any of the preceding claims, in which the nitric acid used to oxidise the elemental sulphur is at a concentration of less than 2.75% by mass.
